# EUROPÄISCHE PATENTSCHRIFT

(11) **EP 3 331 100 B1**
(45) Veröffentlichungstag und Bekanntmachung des Hinweises auf die Patenterteilung: **03.07.2019**
(21) Anmeldenummer: 17202527.2
(22) Anmeldetag: 20.11.2017
(51) Int. Cl.: H01R 12/70, H01R 12/71, H01R 13/20, H01R 12/82, G01S 7/02

(54) **ANSCHLUSSVORRICHTUNG FÜR EIN KERAMIKSUBSTRAT MIT EINER RADARANTENNE, RADAR-SENSOR FÜR EIN FAHRZEUG UND VERFAHREN ZUM ZUSAMMENBAU EINES RADARSENSORS**
CONNECTING DEVICE FOR A CERAMIC SUBSTRATE HAVING A RADAR ANTENNA, RADAR SENSOR FOR A VEHICLE AND METHOD OF ASSEMBLING A RADAR SENSOR
DISPOSITIF DE RACCORDEMENT POUR UN SUBSTRAT CÉRAMIQUE POURVU D'UNE ANTENNE RADAR, CAPTEUR RADAR POUR UN VÉHICULE ET PROCÉDÉ DE MONTAGE D'UN CAPTEUR RADAR

(30) Priorität: 05.12.2016 DE 102016123438
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: Sickinger, Frank, 74321 Bietigheim-Bissingen (DE); Seybold, Marco, 74321 Bietigheim-Bissingen (DE)

(56) Entgegenhaltungen:
- DE-A1-102004 040 326
- DE-A1-102014 105 271
- DE-A1-102014 206 453
- DE-T2- 60 119 335
- US-A- 5 549 479

## Beschreibung

### Technisches Gebiet

Die Erfindung betrifft eine Anschlussvorrichtung für ein Keramiksubstrat mit einer Radarantenne an einer Leiterplatte eines Radarsensors für ein Fahrzeug, wobei das Keramiksubstrat mit der Radarantenne ein plattenförmiges Keramiksubstrat aufweist, welches wenigstens ein elektrisches/elektronisches Funktionsbauteil trägt, und wobei die Anschlussvorrichtung wenigstens eine Einrichtung zur Fixierung des Keramiksubstrats an der Leiterplatte und wenigstens eine elektrische Kontakteinrichtung zur elektrischen Verbindung des wenigstens einen elektrischen/elektronischen Funktionsbauteils mit der Leiterplatte umfasst.

Ferner betrifft die Erfindung einen Radarsensor für ein Fahrzeug, mit einem Radarsensorgehäuse, in dem wenigstens eine Leiterplatte und wenigstens ein Keramiksubstrat mit einer Radarantenne angeordnet ist, und mit wenigstens einer Anschlussvorrichtung, mit der das wenigstens eine Keramiksubstrat mit der Radarantenne an der wenigstens einen Leiterplatte angeschlossen ist, wobei das wenigstens eine Keramiksubstrat mit der Radarantenne wenigstens ein plattenförmiges Keramiksubstrat aufweist, welches wenigstens ein elektrisches/elektronisches Funktionsbauteil trägt, wobei die wenigstens eine Anschlussvorrichtung wenigstens eine Einrichtung zur Fixierung des wenigstens einen Keramiksubstrats an der wenigstens einen Leiterplatte und wenigstens eine elektrische Kontakteinrichtung zur elektrischen Verbindung des wenigstens einen elektrischen/elektronischen Funktionsbauteils mit der wenigstens einen Leiterplatte umfasst.

Außerdem betrifft die Erfindung ein Verfahren zum Zusammenbau eines Radarsensors für ein Fahrzeug.

### Stand der Technik

Bei vom Markt her bekannten Radarsensoren, wie beispielsweise in DE102004040326 offenbart, wird ein Keramiksubstrat mit einer Radarantenne auf einen Metallträger geklebt. Die Verbindung zu einer Leiterplatte, welche Mittel zur Signalverarbeitung aufweist, wird anschließend mit einem Laser-Lötverfahren hergestellt.

Der Erfindung liegt die Aufgabe zugrunde, eine Anschlussvorrichtung, einen Radarsensor und ein Verfahren der eingangs genannten Art zu gestalten, bei denen der Radarsensor einfacher zusammengebaut, insbesondere das Keramiksubstrat mit der Radarantenne zuverlässig und einfacher mechanisch befestigt und elektrisch angeschlossen, werden kann.

### Offenbarung der Erfindung

Diese Aufgabe wird erfindungsgemäß dadurch gelöst, dass die wenigstens eine elektrische Kontakteinrichtung wenigstens ein wenigstens abschnittsweise elastisches elektrisches Kontaktelement aufweist mit wenigstens einem Kontaktabschnitt zur elektrischen Kontaktierung wenigstens eines elektrischen Kontaktbereichs aufseiten des Keramiksubstrats und die wenigstens eine Einrichtung zur Fixierung wenigstens ein Klemmelement einer Klemmeinrichtung zur Fixierung des Keramiksubstrats aufweist.

Erfindungsgemäß wird das Keramiksubstrat mit der Radarantenne rein mechanisch gegen wenigstens einen Kontaktabschnitt wenigstens eines elektrischen Kontaktelements der Anschlussvorrichtung gedrückt und mit der wenigstens einen Klemmeinrichtung fixiert. Mit der wenigstens einen Klemmeinrichtung wird das Keramiksubstrat mit der Radarantenne gegen verrutschen insbesondere in einer Ebene fixiert und gleichzeitig werden die elektrischen Kontakte mit dem wenigstens einen Kontaktabschnitt sichergestellt. Der wenigstens eine Kontaktabschnitt weist eine elektrisch leitende Oberfläche auf, welche mit einer elektrisch leitenden Oberfläche des wenigstens einen elektrischen Kontaktbereichs aufseiten des Keramiksubstrats elektrisch leitend in Kontakt treten kann. Die elektrische Kontaktierung kann alleine durch mechanischen Druck sichergestellt werden. Auf zusätzliche Klebeprozesse und Lötprozesse beim Anschluss des Keramiksubstrats mit der Radarantenne, wie diese bei dem aus dem Stand der Technik bekannte Radarsensor erforderlich sind, kann erfindungsgemäß verzichtet werden.

Das wenigstens eine Kontaktelement ist wenigstens abschnittsweise elastisch. Auf diese Weise kann es elastisch verformt, insbesondere gebogen, werden. So können etwaige bauteilbedingte, montagebedingte und/oder betriebsbedingte Toleranzen besser ausgeglichen werden. Ferner kann so das wenigstens eine Kontaktelement insbesondere zu Montagezwecken elastisch verformt werden.

Die Oberflächen des wenigstens einen Kontaktelements können außerhalb des wenigstens einen Kontaktabschnitts elektrisch leitend oder nicht elektrisch leitend, insbesondere isolierend beschichtet, sein.

Vorteilhafterweise kann das Keramiksubstrat als ebene, insbesondere rechteckige, Platte realisiert sein. Auf diese Weise kann es platzsparend realisiert werden.

Vorteilhafterweise kann das Keramiksubstrat eine relative Dielektrizitätskonstante εᵣ von etwa zwischen 7 und 8 aufweisen. Auf derartigen Keramiksubstraten können Strukturen einer Radarantenne wesentlich kleiner ausgeführt werden als auf üblichen Softsubstraten mit typischen relativen Dielektrizitätskonstanten εᵣ von etwa 3.

Vorteilhafterweise kann das Keramiksubstrat aus Mehrlagenkeramik, insbesondere Niedertemperatur-Einbrand-Keramik, ausgestaltet sein. Niedertemperatur-Einbrand-Keramiken sind im englischsprachigen bekannt als Low Temperature Cofired Ceramics (LTCC). Derartige Keramiksubstrate können einfach und kostengünstig hergestellt werden.

Die erfindungsgemäße Anschlussvorrichtung ermöglicht, dass das Keramiksubstrat mit seiner Rückseite, welche einer Abstrahlseite des Keramiksubstrats mit der Radarantenne abgewandt ist, zu benachbarten Bauteilen beabstandet sein kann und/oder mit entsprechenden Funktionsbauteilen bestückt sein kann. Die Abstrahlseite des Keramiksubstrats mit der Radarantenne ist die Seite, von der Radarsignale abgestrahlt werden und auf die reflektierte Radar-Echosignale gestrahlt werden.

Das wenigstens eine Keramiksubstrat trägt wenigstens ein elektrisches und/oder elektronisches (elektrisches/elektronisches) Funktionsbauteil. Das elektrische/elektronische Funktionsbauteil kann vorteilhafterweise wenigstens ein Sende- und/oder Empfangsbauteil und/oder wenigstens eine Antenne oder eine Antennenstruktur oder dergleichen aufweisen oder daraus bestehen. Auf diese Weise kann das Keramiksubstrat wesentliche Funktionen zum Senden und/oder Empfangen von Radarsignalen tragen. Vorteilhafterweise kann auf der Abstrahlseite des Keramiksubstrats wenigstens eine Antennenstruktur der Radarantenne angeordnet sein. Auf diese Weise kann die Antennenstruktur nahezu frei von Abdeckungen abstrahlen oder empfangen.

Vorteilhafterweise kann an der Rückseite des Keramiksubstrats wenigstens ein Empfangs- und/oder Sendebauteil, insbesondere ein Radar-TRX (Transceiver und Receiver)-Chip, angeordnet sein. Auf diese Weise können die Funktionsbauteile, welche nicht direkt zur Abstrahlung oder zum Empfang von Radarsignalen eingesetzt werden, platzsparend auf der Rückseite des Keramiksubstrats angeordnet werden. Insgesamt können dank der erfindungsgemäßen Anschlussvorrichtung beide Oberflächen des Keramiksubstrats zum Tragen von entsprechenden Funktionsbauteilen des Keramiksubstrats mit der Radarantenne verwendet werden.

Vorteilhafterweise kann auf oder hinter der Rückseite des Keramiksubstrats wenigstens ein Absorberelement angeordnet sein. Mit dem Absorberelement können insbesondere elektromagnetische Signale, insbesondere Radarsignale und/oder andere Störsignale, gedämpft und/oder abgeschirmt werden.

Vorteilhafterweise kann wenigstens ein Absorberelement zwischen dem Keramiksubstrat und der Leiterplatte angeordnet sein. So kann einerseits das Keramiksubstrat mit der Radarantenne vor Störsignalen geschützt werden. Andererseits können die Leiterplatte und dortige elektronische Bauteile vor etwa rückwärts abgestrahlten Radarsignalen der Radarantenne geschützt werden.

Vorteilhafterweise kann wenigstens ein Absorberelement auf der dem Keramiksubstrat zugewandten Oberfläche der Leiterplatte angeordnet, insbesondere aufgeklebt, sein. Auf diese Weise kann der Rückseite des Keramiksubstrats freigehalten werden für etwaige Funktionsbauteile.

Vorteilhafterweise können auf der Leiterplatte Bauteile insbesondere zur Signalverarbeitung und/oder Spannungsversorgung angeordnet sein. Auf diese Weise kann der Radarsensor mit einer eigenen Signalverarbeitung und/oder Spannungsversorgung ausgestattet sein.

Vorteilhafterweise kann wenigstens ein insbesondere elektrisches/elektronisches Bauteil auf einer dem Keramiksubstrat abgewandten Oberfläche der Leiterplatte angeordnet sein. Auf diese Weise kann ein Raum zwischen dem Keramiksubstrat und der Leiterplatte freigehalten werden oder mit anderen Elementen, insbesondere gegebenenfalls ein Absorberelement, versehen werden.

Vorteilhafterweise kann die Leiterplatte eine sogenannte FR4-Leiterkarte sein. Derartige Leiterkarten können eine im Vergleich insbesondere zu marktbekannten Leiterplatten aus Hartpappe größere mechanische Eigenstabilität aufweisen. FR4 (flame retardant class 4) bezeichnet bekanntermaßen eine Klasse von schwer entflammbaren und flammenhemmenden Verbundstoffen bestehend aus Epoxidharz und Glasfasergewebe.

Vorteilhafterweise kann der Radarsensor, insbesondere das Keramiksubstrat mit der Radarantenne, zur Verwendung in einem Radarband zwischen 76 GHz und 81 GHz ausgestaltet sein. Vorteilhafterweise kann der Radarsensor, insbesondere das Keramiksubstrat mit der Radarantenne, zur Verwendung in einem sogenannten Automotive Radarband ausgestaltet sein. Auf diese Weise kann der Radarsensor im Automobilbereich eingesetzt werden.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, verwendet werden. Die Erfindung kann auch bei autonomen oder wenigstens teilweise autonomen Fahrzeugen eingesetzt werden.

Der Radarsensor kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung, verbunden oder Teil einer solchen sein. Auf diese Weise können die mit dem Radarsensor erfassten Objektdaten, insbesondere die Entfernung, Orientierung und/oder Relativgeschwindigkeit eines Objekts relativ zum Fahrzeug, an die Steuervorrichtung übermittelt und zur Beeinflussung von Fahrfunktionen, insbesondere der Geschwindigkeit, einer Bremsfunktion, einer Lenkungsfunktion und/oder einer Ausgabe eines Hinweis- und/oder Warnsignals insbesondere für den Fahrer, verwendet werden.

Bei einer vorteilhaften Ausführungsform kann wenigstens ein Kontaktabschnitt wenigstens eines Kontaktelements zwischen einer Zusammenbauposition und einer Kontaktposition bewegbar sein. Auf diese Weise kann der wenigstens eine Kontaktabschnitt zum Zusammenbau des Keramiksubstrats mit der Radarantenne, insbesondere des Keramiksubstrats, und der Anschlussvorrichtung in eine Zusammenbauposition gebracht werden. In der Zusammenbauposition kann der wenigstens eine Kontaktabschnitt so angeordnet sein, dass er den Zusammenbau nicht behindert. Sobald sich das Keramiksubstrat mit der Radarantenne in der korrekten Montageposition befindet, kann der wenigstens eine Kontaktabschnitt aus seiner Zusammenbauposition in seine Kontaktposition bewegt werden. In der Kontaktposition kontaktiert der wenigstens eine Kontaktabschnitt wenigstens einen entsprechenden Kontaktbereich auf Seiten des Keramiksubstrats mit der Radarantenne.

Vorteilhafterweise kann das wenigstens eine Kontaktelement in seiner Zusammenbauposition und/oder seine Kontaktposition eine elastische mechanische Vorspannung aufweisen. Auf diese Weise kann eine entsprechende Rückstellkraft realisiert werden zum Rückstellen des wenigstens einen Kontaktelements in die jeweils andere Position. Je nach Richtung der Rückstellkraft kann ein Montage und/oder Demontage des Radarsensors, insbesondere ein Einbau und/oder Ausbau des Keramiksubstrats mit der Radarantenne, vereinfacht werden. In der Kontaktposition des wenigstens einen Kontaktelement kann mit einer mechanischen Vorspannung eine elektrische Kontaktierung verbessert werden.

Bei einer weiteren vorteilhaften Ausführungsform kann wenigstens ein Kontaktelement wenigstens einen Betätigungsabschnitt aufweisen, mit dem das wenigstens eine Kontaktelement zum Wechsel wenigstens eines Kontaktabschnitts des Kontaktelements aus einer Kontaktposition in eine Zusammenbauposition oder umgekehrt bewegt werden kann. An dem wenigstens einen Betätigungsabschnitt kann das wenigstens eine Kontaktelement entsprechend betätigt werden. Hierzu kann insbesondere ein entsprechendes Werkzeug eingesetzt werden. Zum Einlegen des Keramiksubstrats mit der Radarantenne kann der wenigstens eine Kontaktabschnitt durch Betätigung an dem wenigstens einen Betätigungsabschnitt zur Einbauseite hin bewegt werden. Sobald die Betätigung des wenigstens einen Kontaktelements beendet wird, insbesondere das Werkzeug entfernt wird, kann der wenigstens eine Kontaktabschnitt insbesondere aufgrund einer mechanischen Rückstellkraft des wenigstens einen Kontaktelements selbsttätig in seine Kontaktposition bewegt werden.

Vorteilhafterweise kann das wenigstens eine Kontaktelement in wenigstens einer Lagerstelle gelagert sein. Wenigstens ein Betätigungsabschnitt und wenigstens ein Kontaktabschnitt können sich auf gegenüberliegenden Seite der wenigstens einen Lagerstelle befinden. Durch Druck auf den wenigstens einen Betätigungsabschnitt kann der wenigstens eine Kontaktabschnitt ähnlich einem Hebel entsprechend bewegt werden.

Vorteilhafterweise kann wenigstens eine Lagerstelle zwei gegenüberliegende Lagerelemente, insbesondere Haltestäbe, aufweisen. Zwischen den Lagerelementen kann das wenigstens eine Kontaktelement beidseitig insbesondere verschiebbar gelagert werden.

Vorteilhafterweise kann wenigstens ein Kontaktelement zwischen zwei Lagerstellen gelagert sein. Wenigstens ein Betätigungsabschnitt kann sich zwischen den beiden Lagerstellen befinden. Wenigstens ein Kontaktabschnitt kann sich in einem Bereich außerhalb der beiden Lagerstellen befinden.

Vorteilhafterweise kann ein dem wenigstens einen Kontaktabschnitt abgewandtes Ende des wenigstens einen Kontaktelements an der Leiterplatte fixiert und/oder elektrisch kontaktiert sein. Auf diese Weise kann durch entsprechende Wahl der Lagerstellen und entsprechende Anordnung des wenigstens einen Betätigungsabschnitts relativ zu den Lagerstellen der wenigstens eine Kontaktabschnitt um das fixierte Ende des wenigstens einen Kontaktelements zum Wechseln zwischen der Zusammenbauposition und der Kontaktposition geschwenkt und/oder gebogen werden.

Bei einer weiteren vorteilhaften Ausführungsform kann wenigstens ein Kontaktelement mit wenigstens einem Kontaktabschnitt an wenigstens einer Plattenfläche des Keramiksubstrats elektrisch kontaktierend angreifen. Als Plattenflächen im Sinne der Erfindung werden die beiden gegenüberliegenden ausgedehnten Oberflächen des plattenförmigen Keramiksubstrats bezeichnet. An der wenigstens einen Plattenfläche kann der wenigstens eine Kontaktabschnitt derart angreifen, dass das Strahlungsfeld des Keramiksubstrats mit der Radarantenne in bezüglich der Abstrahlrichtung in azimutaler Richtung weniger, vorzugsweise nicht, gestört wird.

Vorteilhafterweise kann wenigstens ein Kontaktabschnitt an einer bezüglich einer Zusammenbaurichtung des Keramiksubstrats mit der Radarantenne und der wenigstens einen Anschlussvorrichtung vorderen Plattenfläche, insbesondere der Rückseite, des Keramiksubstrats elektrisch leitend angreifen. Auf diese Weise schränkt die Kontaktierung die entsprechende andere Plattenfläche, insbesondere die Abstrahlseite, nicht ein. Alternativ oder zusätzlich kann wenigstens ein Kontaktabschnitt an einer hinteren Plattenfläche, insbesondere der Abstrahlseite, des Keramiksubstrats elektrisch leitend angreifen. Alternativ oder zusätzlich kann wenigstens ein Kontaktabschnitt an einer vorderen Plattenfläche des Keramiksubstrats und wenigstens ein Kontaktabschnitt kann an einer hinteren Plattenfläche angreifen. Auf diese Weise können beide Seiten des Keramiksubstrats für entsprechende elektrische Kontaktierungen genutzt werden.

Bei einer weiteren vorteilhaften Ausführungsform kann wenigstens ein Kontaktelement wenigstens zwei Kontaktfinger aufweisen, welche auf gegenüberliegenden Plattenflächen des Keramiksubstrats angreifen können und/oder zwei Kontaktelemente können jeweils wenigstens einen Kontaktfinger aufweisen, welche auf gegenüberliegenden Plattenflächen des Keramiksubstrats angreifen können. Auf diese Weise können die Kontaktfinger das Keramiksubstrat gabelartig umgreifen.

Vorteilhafterweise können die Kontaktfinger im Bereich eines Randes des Keramiksubstrats angreifen. So können die Kontaktfinger den Rand des Keramiksubstrats umgreifen. Die Kontaktfinger können so eine laterale Positionierung und/oder Fixierung des Keramiksubstrats weiter verbessern.

Vorteilhafterweise kann wenigstens ein Kontaktfinger wenigstens einen Kontaktabschnitt aufweisen zum elektrischen Kontaktieren wenigstens eines entsprechenden Kontaktbereichs auf Seiten des Keramiksubstrats. Vorteilhafterweise können beide Kontaktfinger jeweils einen Kontaktabschnitt aufweisen. So kann auf beiden Plattenflächen des Keramiksubstrats jeweils eine entsprechende Kontaktierung stattfinden. Alternativ kann lediglich einer der Kontaktfinger eines Kontaktfinger-Paares einen Kontaktabschnitt bilden oder aufweisen. In diesem Fall kann der jeweils andere Kontaktfinger lediglich als Gegenlager dienen.

Bei einer Ausführungsform, bei der wenigstens ein Kontaktelement wenigstens zwei Kontaktfinger aufweist, welche auf gegenüberliegenden Plattenflächen angreifen können, können beide Kontaktfinger durch entsprechende Betätigung des wenigstens einen Kontaktelements aus einer Zusammenbauposition in eine Kontaktposition oder umgekehrt bewegt werden.

Bei der Ausführungsform, bei der zwei Kontaktelemente jeweils wenigstens einen Kontaktfinger aufweisen, kann einer der Kontaktfinger durch entsprechende Betätigung des entsprechenden Kontaktelements aus einer Zusammenbauposition in eine Kontaktposition oder umgekehrt bewegt werden. Die beiden Kontaktfinger können so unabhängig voneinander betätigt werden. So kann eine Montage und/oder Demontage des Radarsensors weiter vereinfacht werden.

Bei einer weiteren vorteilhaften Ausführungsform kann wenigstens ein elektrisches Kontaktelement einen Federarm aufweist, welcher an einem freien Ende wenigstens einen Kontaktfinger mit wenigstens einem Kontaktabschnitt aufweisen. Mit einem Federarm können entsprechende Abstände zwischen einem Verbindungsende insbesondere auf Seiten der Leiterplatte und wenigstens einem Kontaktabschnitt insbesondere am freien Ende des Federarms überbrückt werden.

Vorteilhafterweise kann das wenigstens eine elektrische Kontaktelement elektrisch leitendes Material aufweisen. Auf diese Weise kann das wenigstens eine elektrische Kontaktelement als elektrischer Leiter wirken. Zusätzlich oder alternativ kann das wenigstens eine elektrische Kontaktelement elastisches Material aufweisen. Auf diese Weise kann das wenigstens eine Kontaktelement elastisch bewegt, insbesondere geformt, gebogen oder dergleichen, werden.

Vorteilhafterweise kann das wenigstens eine elektrische Kontaktelement aus elektrisch leitendem, elastischen Material sein. So können die elektrisch leitenden Eigenschaften mit den elastischen Eigenschaften kombiniert werden. Vorteilhafterweise kann das wenigstens eine elektrische Kontaktelement aus Metall, insbesondere Federstahl, sein. Bei einer weiteren vorteilhaften Ausführungsform kann wenigstens ein Anschlussgrundkörper der Anschlussvorrichtung wenigstens einen Teil wenigstens eines Kontaktelements und/oder wenigstens ein Klemmelement der wenigstens einen Klemmeinrichtung wenigstens mit bilden und/oder halten. Mit dem wenigstens einen Anschlussgrundkörper kann die Anschlussvorrichtung mechanisch und/oder elektrisch mit der Leiterplatte verbunden sein oder werden.

Vorteilhafterweise kann wenigstens ein Anschlussgrundkörper länglich sein. Auf diese Weise kann er entlang einer Längsseite oder Querseite des Keramiksubstrats angeordnet werden.

Vorteilhafterweise kann die Anschlussvorrichtung wenigstens eine Anschlussleiste aufweisen oder daraus bestehen. Die Anschlussleiste kann wenigstens einen Anschlussgrundkörper mit wenigstens einem Kontaktelement und wenigstens einen Klemmelement umfassen. An einer länglichen Anschlussleiste können mehrere Kontaktelemente und/oder Klemmelemente nebeneinander angeordnet sein.

Bei einer weiteren vorteilhaften Ausführungsform kann wenigstens ein Kontaktelement in und/oder auf und/oder an wenigstens einem Anschlussgrundkörper gelagert sein. Auf diese Weise kann das wenigstens eine Kontaktelement gehalten, positioniert und zwischen seiner Kontaktposition und seiner Zusammenbauposition bewegt werden.

Bei einer weiteren vorteilhaften Ausführungsform kann die Anschlussvorrichtung, gegebenenfalls wenigstens ein Anschlussgrundkörper, wenigstens eine Führung für wenigstens ein Werkzeug zur Betätigung wenigstens eines Betätigungsabschnitts wenigstens eines Kontaktelements aufweisen. Auf diese Weise kann die Anschlussvorrichtung, insbesondere das wenigstens eine Kontaktelement, zur Montage und/oder Demontage einfacher betätigt werden.

Bei einer weiteren vorteilhaften Ausführungsform kann wenigstens ein Klemmelement einer Zusammenbaurichtung des Keramiksubstrats mit der Radarantenne und der Anschlussvorrichtung entgegen gerichtet sein und/oder wenigstens ein Klemmelement kann in einer Zusammenbaurichtung des Keramiksubstrats mit der Radarantenne und der Anschlussvorrichtung gerichtet sein. Auf diese Weise kann das wenigstens eine Klemmelement direkt an einer Plattenfläche des Keramiksubstrats angreifen. So kann eine Klemmkraft besser in das Keramiksubstrat eingeleitet werden.

Vorteilhafterweise kann wenigstens ein Klemmelement auf der in Zusammenbaurichtung des Keramiksubstrats mit der Radarantenne mit der Anschlussvorrichtung vorderen Plattenfläche, insbesondere der Rückseite, an dem Keramiksubstrat angreifen und/oder wenigstens ein Klemmelement kann auf der hinteren Plattenfläche, insbesondere der Abstrahlseite, an dem Keramiksubstrat angreifen.

Vorteilhafterweise können zwei Klemmelemente auf in Zusammenbaurichtung gegenüberliegenden Seiten an dem Keramiksubstrats angreifen. Auf diese Weise kann das Keramiksubstrat zwischen den beiden Klemmelementen eingeklemmt werden.

Vorteilhafterweise kann wenigstens ein Klemmelement gegebenenfalls an wenigstens einem Anschlussgrundkörper angeordnet sein. Auf diese Weise kann es gemeinsam mit wenigstens einer Kontakteinrichtung realisiert werden. Alternativ oder zusätzlich kann wenigstens ein Klemmelement an einem Teil des Radarsensorgehäuses angeordnet sein. Auf diese Weise kann das wenigstens eine Klemmelement beim Zusammenbau des Radarsensorgehäuses automatisch gegen das Keramiksubstrat gepresst werden.

Vorteilhafterweise kann wenigstens ein erstes Klemmelement an wenigstens einem Anschlussgrundkörper und wenigstens ein dem ersten Klemmelement zugeordnetes zweites Klemmelement an dem Radarsensorgehäuse angeordnet sein. Auf dem wenigstens einen ersten Klemmelement kann das Keramiksubstrat mit der Radarantenne beim Zusammenbau abgelegt werden. Anschließend kann beim Schließen des Radarsensorgehäuses das Keramiksubstrat mit der Radarantenne mit dem wenigstens einen zweiten Klemmelement festgeklemmt werden.

Bei einer weiteren vorteilhaften Ausführungsform kann wenigstens ein Kontaktelement und/oder wenigstens ein Teil der Klemmeinrichtung und/oder gegebenenfalls wenigstens ein Anschlussgrundkörper an der Leiterplatte angeordnet, insbesondere an dieser befestigt und mit dieser elektrisch verbunden, sein.

Vorteilhafterweise kann wenigstens ein Kontaktelement und/oder wenigstens ein Teil der Klemmeinrichtung und/oder gegebenenfalls wenigstens ein Anschlussgrundkörper mittels einer Lötverbindung oder einer anderen Bestückungsmethode mit der Leiterplatte verbunden sein.

Bei einer weiteren vorteilhaften Ausführungsform kann wenigstens ein Klemmelement an einem Radom des Radarsensors realisiert sein. Auf diese Weise kann das Keramiksubstrat mit der Radarantenne mithilfe des Radoms in dem Radarsensorgehäuse fixiert werden. Das Keramiksubstrat mit der Radarantenne kann bei der Montage des Radoms auf einem Grundgehäuseteil des Radarsensors automatisch mit dem entsprechenden wenigstens einen Klemmelement festgeklemmt werden.

Ein Radom ist bekanntermaßen eine geschlossene Schutzhülle, die Radarantennen vor äußeren mechanischen und chemischen Einflüssen wie Wind oder Regen schützt. Das Radom ist Teil des Radarsensorgehäuses. Bei Radoms werden bekanntermaßen Materialien verwendet, die für Radarsignale besonders gut durchlässig sind.

Vorteilhafterweise kann eine Verbindung des Radoms mit dem Grundgehäuseteil so ausgestaltet sein, dass sie eine mechanische Vorspannung zum Festklemmen des Keramiksubstrats mit der Radarantenne bereitstellt. Auf diese Weise können montagebedingte, betriebsbedingte und/oder bauteilbedingte Toleranzen insbesondere im Bereich des Radarsensorgehäuses besser kompensiert werden.

Bei einer weiteren vorteilhaften Ausführungsform können jeweils wenigstens zwei Klemmelemente und/oder wenigstens zwei Kontaktelemente, insbesondere zwei Anschlussgrundkörper, gegenüberliegend angeordnet sein. Auf diese Weise kann das Keramiksubstrat mit der Radarantenne an gegenüberliegenden Rändern elektrisch kontaktiert und/oder fixiert werden.

Vorteilhafterweise kann gegenüberliegend jeweils wenigstens ein Klemmelement und wenigstens ein Kontaktelement, insbesondere wenigstens ein Anschlussgrundkörper, angeordnet sein.

Ferner wird die technische Aufgabe bei dem erfindungsgemäßen Radarsensor dadurch gelöst, dass die wenigstens eine elektrische Kontakteinrichtung wenigstens ein wenigstens abschnittsweise elastisches elektrisches Kontaktelement aufweist mit wenigstens einem Kontaktabschnitt zur elektrischen Kontaktierung wenigstens eines elektrischen Kontaktbereichs aufseiten des wenigstens einen Keramiksubstrats und die wenigstens eine Einrichtung zur Fixierung wenigstens ein Klemmelement einer Klemmeinrichtung zur Fixierung des wenigstens einen Keramiksubstrats aufweist.

Bei einer vorteilhaften Ausführungsform kann wenigstens ein Anschluss für externe Signal- und/oder Stromversorgungsleitungen aus dem Radarsensorgehäuse herausführen. Mit dem Anschluss können Signal- und/oder Stromversorgungsleitungen innerhalb des Radarsensors mit entsprechenden externen Leitungen verbunden werden.

Vorteilhafterweise kann der wenigstens eine Anschluss ein elektrischer Anschluss sein. Auf diese Weise können interne elektrische Leitungen und externe elektrische Leitungen miteinander verbunden werden.

Vorteilhafterweise kann der wenigstens eine Anschluss in normaler Einbauorientierung des Radarsensors räumlich unten an dem Radarsensorgehäuse angeordnet sein. Auf diese Weise kann die Gefahr des Eindringen von Feuchtigkeit und Wasser in den Anschluss und/oder das Radarsensorgehäuse verringert werden.

Vorteilhafterweise kann der wenigstens eine Anschluss mit einer Schnellverbindung, insbesondere als Stecker und/oder Buchse, realisiert sein. Auf diese Weise kann der wenigstens eine Anschluss einfach mit entsprechenden externen Leitungsanschlüssen verbunden werden.

Vorteilhafterweise kann das Radarsensorgehäuse wenigstens ein Grundgehäuseteil mit einer Einbauseite wenigstens für die wenigstens eine Radarantenne und ein Radom aufweisen. Mit dem Radom kann die Einbauseite verschlossen sein. Durch das Radom können beim Betrieb des Radarsensors von der wenigstens einen Radarantenne gesendete Signale und/oder zu empfangende Signale hindurch treten. Das Radarsensorgehäuse kann eine Mehrzahl von elastischen Klammerelementen aufweisen. Mit den Klammerelementen kann das Radom an dem wenigstens einen Grundgehäuseteil befestigt sein. Vorteilhafterweise kann wenigstens eines der Klammerelemente mit dem Radom fest verbunden sein.

Vorteilhafterweise kann wenigstens ein Klammerelement an dem Radom vormontiert sein. Das wenigstens eine Klammerelement kann so verliersicher an dem Radom angeordnet sein. Auf diese Weise kann das wenigstens eine Klammerelement gemeinsam mit dem Radom montiert werden. Mit dem in das Radom integrierte wenigstens eine Klammerelement kann ein Montageaufwand, insbesondere eine Anzahl von erforderlichen Bauteilen an einer Montagelinie, reduziert werden. Durch die Verwendung von Klammerelementen kann der Radarsensor ohne zusätzliche Schweiß-, Löt-, Klebe- und/oder Schraubprozesse aufgebaut werden. Auf diese Weise können das Radom und mindestens ein Grundgehäuseteil, welche auch aus unterschiedlichen Materialien bestehen können, stabil miteinander verbunden werden. Mithilfe der elastischen Klammerelemente kann eine mechanische Grundspannung realisiert werden, mit welcher die wenigstens eine Radarantenne, insbesondere das wenigstens eine Keramiksubstrat mit der Radarantenne, festgeklemmt und fixiert werden kann.

Vorteilhafterweise kann wenigstens eines der Klammerelemente als Federelement realisiert sein. Federelemente können elastisch ausgestaltet sein.

Vorteilhafterweise kann wenigstens ein Klammerelement Federstahl aufweisen oder daraus bestehen. Federstahl kann einfach verarbeitet werden und ist elastisch biegbar.

Vorteilhafterweise kann das wenigstens eine Grundgehäuseteil Metall, insbesondere Aluminium, aufweisen oder daraus bestehen. Auf diese Weise kann ein mechanisch stabiles Radarsensorgehäuse realisiert werden.

Vorteilhafterweise kann das Radom insbesondere thermoplastischen Kunststoff, insbesondere Polybutylenterephthalat (PBT) und/oder Polyamid (PA), aufweisen oder daraus bestehen. Auf diese Weise kann das Radom für die Radarsignale durchlässig sein. Es ist insbesondere nicht erforderlich, dass sowohl das wenigstens eine Grundgehäuseteil und das Radom aus Kunststoff bestehen. Bekanntermaßen können Gehäuseteile aus Kunststoff mit der Zeit auf sie einwirkenden Drucken nachgeben. Durch die Elastizität der Klammerelemente kann dies kompensiert werden. So kann auch bei einer Verbindung von Gehäuseteilen, insbesondere einem Radom und/oder einem Grundgehäuseteil, aus Kunststoff über die Lebensdauer ein konstanter Druck aufrechterhalten werden. Mit der erfindungsgemäßen Klammerverbindung kann verhindert werden, dass sich die Verbindung zwischen dem wenigstens einen Grundgehäuseteil und dem Radom mit der Zeit lockert.

Vorteilhafterweise kann wenigstens eines der Klammerelemente im Bereich eines seiner Enden mit dem Radom verbunden, insbesondere in das Material des Radoms eingebettet, sein. Auf diese Weise kann das wenigstens eine Klammerelement mit einem dem verbundenen Ende abgewandten Abschnitt mit dem wenigstens einen Grundgehäuseteil insbesondere lösbar verbunden sein oder werden.

Vorteilhafterweise kann wenigstens ein Ende der wenigstens einen Klammerelements in das Material des Radoms eingegossen sein. Auf diese Weise kann einem stabile Verbindung hergestellt werden. Das wenigstens eine Klammerelement kann bereits bei der Herstellung des Radoms nach einem Kunststoffformverfahren, insbesondere einem Spritz- und/oder Gussverfahren, in das Material des Radoms eingebettet werden.

Vorteilhafterweise kann wenigstens ein Klammerelement wenigstens eine S-förmige Biegung aufweisen. Auf diese Weise kann das wenigstens seine Klammerelement insbesondere zum Schließen und/oder Öffnen der Klammerverbindung entsprechend elastisch gebogen werden. Im Bereich der S-förmigen Biegung kann das wenigstens eine Klammerelement dabei elastisch gestreckt werden. Nach dem Erreichen der Schließposition beziehungsweise der Öffnungsposition kann das wenigstens eine Klammerelement aufgrund seiner Rückstellkraft seine ursprüngliche Form selbsttätig wieder einnehmen. Nach dem Schließen der Klammerverbindung kann so aufgrund der Federwirkung eine entsprechende Klemmkraft erzeugt werden, mit der das Radom gegen das wenigstens eine Grundgehäuseteil und/oder gegebenenfalls gegen die wenigstens eine Radarantenne gepresst werden kann.

Vorteilhafterweise kann wenigstens eines der Klammerelemente wenigstens einen Rastabschnitt aufweisen. Der wenigstens eine Rastabschnitt kann mit einem entsprechenden gehäuseseitigen Rastabschnitt auf Seiten des Grundgehäuseteils verrasten. Auf diese Weise kann die Klammerverbindung mittels einer Rastverbindung gesichert werden. Ferner kann eine derartige Rastverbindung lösbar ausgestaltet sein. So kann bei Bedarf, insbesondere zu Wartungszwecken, das Radarsensorgehäuse wieder geöffnet werden.

Vorteilhafterweise kann wenigstens eines der Klammerelemente wenigstens eine Rastöse aufweisen. Entsprechend kann auf Seiten des Grundgehäuseteils eine entsprechende Rastnase angeordnet sein. Die gehäuseseitige Rastnase kann zum Verschließen und Sichern der Klammerverbindung in die Rastöse des wenigstens einen Klammerelements einrasten.

Vorteilhafterweise kann wenigstens eines der Klammerelemente von außerhalb des Radarsensorgehäuses zugänglich angeordnet sein. Auf diese Weise kann das wenigstens eine Klammerelement von außen betätigt werden.

Vorteilhafterweise kann das wenigstens eine Klammerelement wenigstens einen Betätigungsabschnitt aufweisen. In dem wenigstens einen Betätigungsabschnitt kann das wenigstens eine Klammerelement zum öffnen und/oder schließen betätigt und dabei entsprechend elastisch gebogen werden.

Vorteilhafterweise kann das wenigstens eine Klammerelement wenigstens eine insbesondere S-förmige Biegung aufweisen. Auf diese Weise kann die Biegecharakteristik des wenigstens einen Klammerelements verbessert werden.

Vorteilhafterweise kann der wenigstens eine Betätigungsabschnitt an einer S-förmigen Biegung des wenigstens einen Klammerelements angeordnet sein. Durch entsprechende Druckausübung auf die S-förmigen Biegung kann diese gestreckt und damit das wenigstens eine Klammerelement verlängert werden. So kann ein Abstand zwischen dem in dem Radom befestigten Ende und einem Befestigungsabschnitt für das Grundgehäuseteil, insbesondere einem Rastabschnitt, vergrößert werden. Der Befestigungsabschnitt kann auf diese Weise mit einen entsprechenden Befestigungsabschnitt auf Seiten des Grundgehäuseteils in Verbindung gebracht werden. Insbesondere kann ein etwaiger Rastabschnitt so über einen entsprechenden gehäuseseitigen Rastabschnitt geschoben oder gestülpt werden und anschließend durch die elastische Rückstellkraft des wenigstens einen Klammerelements mit diesem eine sichere Rastverbindung eingehen.

Vorteilhafterweise kann der wenigstens eine Betätigungsabschnitt zum Angriff wenigstens eines Werkzeuges ausgestaltet sein. Auf diese Weise kann eine Krafteinwirkung auf den wenigstens ein Betätigungsabschnitt verbessert werden.

Vorteilhafterweise können mehrere Klammerelemente bezüglich einer Zusammenbaurichtung des Radoms mit dem Grundgehäuseteil umfangsmäßig verteilt angeordnet sein. Auf diese Weise kann das Radom umfangsmäßig gleichmäßiger mit dem wenigstens einen Grundgehäuseteil verbunden und gegen dieses gedrückt werden.

Außerdem wird die technische Aufgabe bei dem Verfahren dadurch gelöst, dass ein Teil wenigstens einer Anschlussvorrichtung für ein Keramiksubstrat mit einer Radarantenne an einer Leiterplatte angeordnet und mit entsprechenden elektrischen Leitungen elektrisch verbunden wird, die Leiterplatte in einem Grundgehäuseteil eines Radarsensorgehäuses des Radarsensors angeordnet wird, das Keramiksubstrat mit der Radarantenne auf wenigstens einem Klemmelement der wenigstens einen Anschlussvorrichtung auf Seiten der Leiterplatte positioniert wird und mit einer elektrischen Kontakteinrichtung der Anschlussvorrichtung elektrisch kontaktiert wird, ein Radom auf das Grundgehäuseteil montiert und dabei mit wenigstens einem Klemmelement der wenigstens Anschlussvorrichtung auf Seiten des Radoms das Keramiksubstrat mit der Radarantenne gegenüber dem wenigstens einen Klemmelement der wenigstens einen Anschlussvorrichtung auf Seiten der Leiterplatte festgeklemmt wird und das Radom an dem Grundgehäuseteil fixiert wird. Erfindungsgemäß wird die elektrische Kontaktierung zwischen dem Keramiksubstrat mit der Radarantenne und der Leiterplatte beim Positionieren des Keramiksubstrats auf der wenigstens einen Anschlussleitung realisiert. Die Fixierung des Keramiksubstrats wird automatisch beim Anbau des Radoms realisiert.

Bei einer vorteilhaften Ausgestaltung des Verfahrens kann wenigstens ein elektrisches Kontaktelement der elektrischen Kontakteinrichtung vor dem Positionieren des Keramiksubstrats mit der Radarantenne auf dem wenigstens einen Klemmelement der wenigstens einen Anschlussvorrichtung auf Seiten der Leiterplatte in eine Zusammenbauposition gebracht werden und das wenigstens eine elektrische Kontaktelement kann nach dem Positionieren des Keramiksubstrats mit der Radarantenne in eine Kontaktposition gebracht werden. Auf diese Weise kann das wenigstens eine elektrische Kontaktelement zum Zusammenbau freigegeben und nach dem Einbau des Keramiksubstrats mit der Radarantenne mit dieser elektrisch kontaktiert werden.

Vorteilhafterweise kann wenigstens ein Klammerelement zum Schließen einer Rastverbindung mit dem Grundgehäuseteil elastisch gestreckt und so mit einer mechanischen elastischen Vorspannung versehen werden, mit welcher das Radom und das Grundgehäuseteil zusammengepresst werden. Durch die mechanische elastische Vorspannung kann darüber hinaus eine Klemmkraft zwischen den Klemmelementen der wenigstens einen Anschlussvorrichtung erhöht werden. So kann eine Fixierung und eine elektrische Kontaktierung des Keramiksubstrats mit der Radarantenne im Radarsensorgehäuse verbessert werden. Die Fixierung und die elektrische Kontaktierung des Keramiksubstrats mit der Radarantenne erfolgt dabei automatisch beim Verschließen des Radarsensorgehäuses.

Im Übrigen gelten die im Zusammenhang mit der erfindungsgemäßen Anschlussvorrichtung, dem erfindungsgemäßen Radarsensor und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrischer Darstellung eines Radarsensors mit einem Radarsensorgehäuse, in dem ein Keramiksubstrat mit einer Radarantenne mit zwei Anschlussleisten gemäß einem ersten Ausführungsbeispiel an eine Leiterplatte des Radarsensors angeschlossen ist;
- Figur 2: eine Draufsicht auf den Radarsensor der Figur 1, wobei ein Radom des Radarsensors transparent gezeigt ist;
- Figur 3: einen Schnitt durch die Leiterplatte und das Keramiksubstrat mit der Radarantenne des Radarsensors aus den Figuren 1 und 2 im Bereich eine der Anschlussleisten;
- Figur 4: einen Schnitt durch das Radarsensorgehäuse des Radarsensors aus den Figuren 1 bis 3 im Bereich einer Klemmverbindung zwischen dem Radom und einen Grundgehäuseteil;
- Figur 5: einen Schnitt durch eine Leiterplatte und ein Keramiksubstrat mit einer Radarantenne eines Radarsensors im Bereich einer Anschlussleiste gemäß einem zweiten Ausführungsbeispiel.

In den Figuren sind gleiche Bauteile mit gleichen Bezugszeichen versehen.

### Ausführungsform(en) der Erfindung

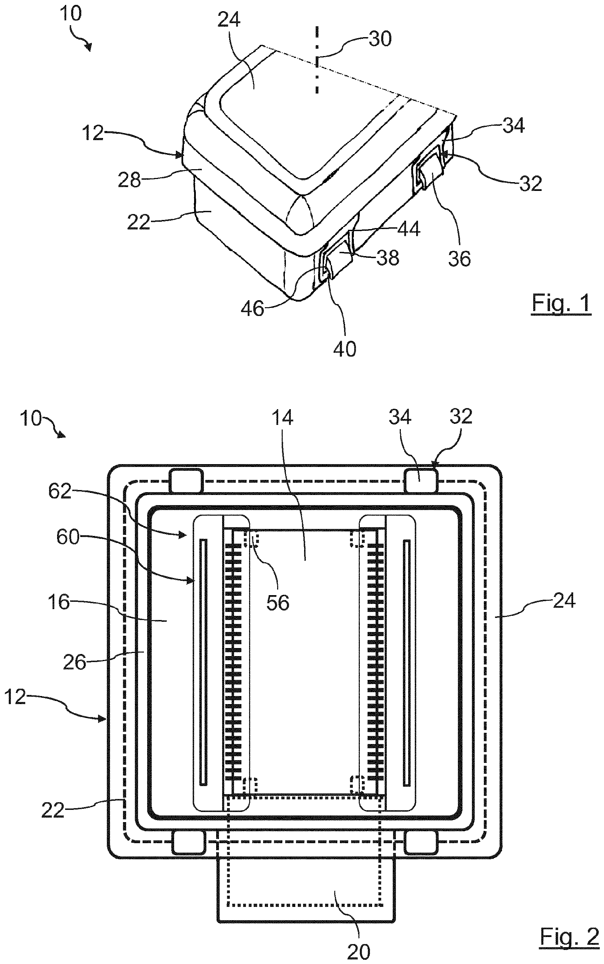

In den Figuren 1 bis 4 ist ein Radarsensor 10 in unterschiedlichen Darstellungen gezeigt. Der Radarsensor 10 kann beispielsweise in Verbindung mit einem Fahrerassistenzsystem eines Kraftfahrzeugs Verwendung finden.

Der Radarsensor 10 umfasst ein öffenbares Radarsensorgehäuse 12, in dem ein Keramiksubstrat 90 mit einer Radarantenne 14 und eine Leiterplatte 16 mit Bauteilen 18 zur Signalverarbeitung und Spannungsversorgung angeordnet sind. Ferner verfügt der Radarsensor 10 über einen Anschlussstecker 20, welcher aus dem Radarsensorgehäuse 12 herausführt und über den entsprechende Signalleitungen und Stromversorgungsleitungen angeschlossen werden können.

Das Radarsensorgehäuse 12 ist aus einem Grundgehäuseteil 22 und einem Radom 24 zusammengesetzt. Das Grundgehäuseteil 22 ist beispielsweise aus Aluminium. Das Radom 24 ist aus Kunststoff, beispielsweise PBT.

Das Radarsensorgehäuse 12 hat insgesamt etwa die Form eines Quaders. Dabei haben das Grundgehäuseteil 22 und das Radom 24 jeweils die Form einer etwa quaderförmigen Wanne. Das Radom 24 ist auf einen Rand einer Umfangswand des Grundgehäuseteils 22 gesteckt. Eine Umfangswand 28 des Radoms 24 umgreift die Umfangswand des Grundgehäuseteils 22.

Das Grundgehäuseteil 22 weist eine Einbauseite 26 mit einer Einbauöffnung auf. Durch die Einbauöffnung können bei beim Zusammenbau des Radarsensors 10 das Keramiksubstrat 90 mit der Radarantenne 14 und die Leiterplatte 16 eingebaut werden. Die Einbauseite 26 ist mit dem Radom 24 öffenbar verschlossen. Zum Zusammenbau werden das Grundgehäuseteil 22 das Keramiksubstrat 90 mit der Radarantenne 14, die Leiterplatte 16 und das Radom 24 parallel zu einer gedachten Montageachse 30 zusammengesetzt.

Das Radom 24 ist mittels insgesamt vier im wesentlichen identische Klammerverbindungen 32 an dem Grundgehäuseteil 22 fixiert. Das Radom 24 wird mit den Klammerverbindungen 32 parallel zur Montageachse 30 gegen den Rand der Umfangswand des Grundgehäuseteils 22 gedrückt. Die Klammerverbindungen 32 befinden sich auf gegenüberliegenden Längsseiten des Radarsensorgehäuses 12. Dabei sind jeweils zwei der Klammerverbindungen 32 auf der gleichen Längsseite des Radarsensorgehäuses 12 angeordnet.

Jede Klammerverbindung 32 umfasst ein elastisches Klammerelement 34 aufseiten des Radoms 24 und eine Rastnase 36 aufseiten des Grundgehäuseteils 22.

Die Rastnasen 36 befinden sich an der äußeren Umfangsseite des Grundgehäuseteils 22 und erheben sich bezüglich der Montageachse 30 nach radial außen. Jede der Rastnasen 36 weist auf ihrer der Einbauseite 26 zugewandten Seite eine keilartige Schräge 38 auf. Auf der der Einbauseite 26 abgewandten Seite verfügt jede Rastnase 36 über eine Rastnut 40.

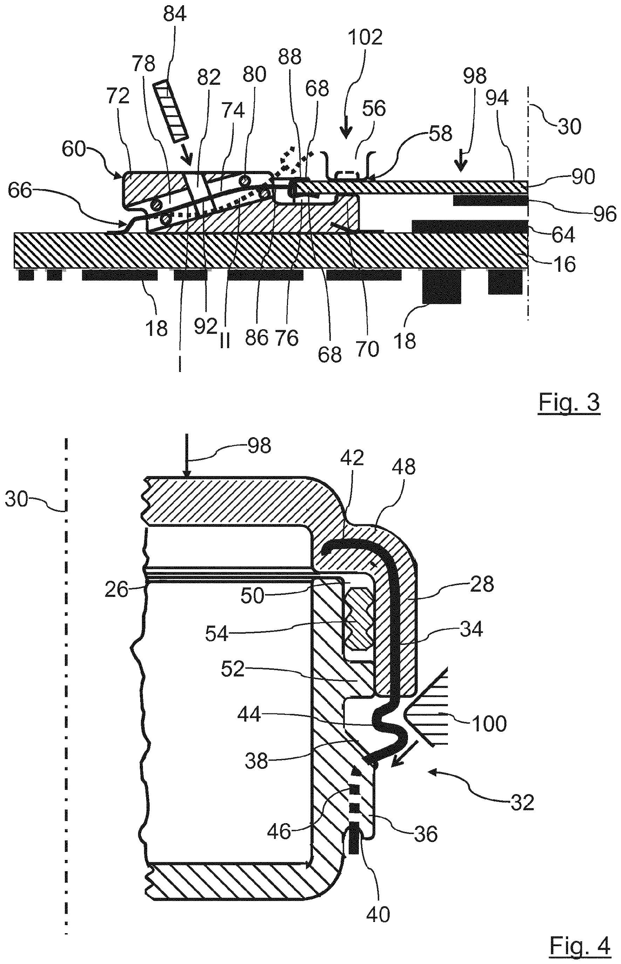

Die Klammerelemente 34 sind jeweils elastische Federelemente beispielsweise aus Federstahl. Die Klammerelemente 34 werden im Folgenden anhand des Klammerelements 34 aus der Figur 4 näher erläutert.

Im Bereich eines seiner Enden 42 weist das Klammerelement 34 eine Biegung etwa um 90° auf. Der Abschnitt des Klammerelements 34 im Be reich dieser Biegung ist in die Umfangswand 28 des Radoms 24 eingebettet. Das Klammerelement 34 erstreckt sich im Bereich seines Endes 42 vor der 90°-Biegung bezü glich der Montageachse 30 nach radial innen in einen deckelseitigen Absatz 48 des Radoms 24. Auf der dem Ende 42 abgewandten Seite der 90°-Biegung erstreckt sich da s Klammerelement 34 grob etwa parallel zur Montageachse 30.

Das Klammerelement 34 verfügt in seinem etwa parallel zur Montageachse 30 verlaufenden Mittelteil über eine S-förmige Biegung 44. Die S-förmige Biegung 44 befindet sich in einem Bereich außerhalb des Materials der Umfangswand 28. Die S-förmige Biegung 44 befindet sich in montiertem Zustand etwa auf Höhe der keilartigen Schräge 38 der entsprechenden Rastnase 36. Ein Biegeabschnitt der S-förmigen Biegung 44, welcher der Umfangswand 28 des Radoms 24 zugewandt ist, erhebt sich zur Umfangswand des Grundgehäuseteils 22 hin. Ein Biegeabschnitt der S-förmigen Biegung 44, welcher der Umfangswand 28 des Radoms 24 abgewandt ist, erhebt sich von der Umfangswand des Grundgehäuseteils 22 weg nach außen.

Zwischen der S-förmigen Biegung 44 und einem freien Ende des Klammerelements 34 weist das Klammerelement 34 eine Rastöse 46 auf. Die Rastöse 46 hat die Form eines rechteckigen Fensters. Die Innenabmessungen der Rastöse 46 sind etwas größer als die entsprechenden Außenabmessungen der Rastnase 36. So kann die Rastöse 46 von außen über die Rastnase 36 geführt werden. In der Figur 4 sind der besseren Verständlichkeit wegen die eigentlich durch die Rastnase 36 verdeckten Seitenbegrenzungen der Rastöse 46 gestrichelt angedeutet.

Der deckelseitige Absatz 48 bildet eine vom Radom 24 axial zur Montageachse 30 betrachtet hintere Begrenzung einer Dichtungsnut 50. Die Dichtungsnut 50 erstreckt sich bezüglich der Montageachse 30 umfangsmäßig entlang der äußeren Umfangsseite des Grundgehäuseteils 22 und umgibt die Einbauseite 26.

Auf der dem deckelseitigen Absatz 48 bezüglich der Montageachse 30 axial gegenüberliegenden Seite wird die Dichtungsnut 50 vorne von einem Vorsprung 52 des Grundgehäuseteils 22 begrenzt. Der Vorsprung 52 erstreckt sich bezüglich der Montageachse 30 umfangsmäßig an der äußeren Umfangsseite des Grundgehäuseteils 22. Der Vorsprung 52 befindet sich axial zur Montageachse 30 betrachtet zwischen der Einbauseite 26 und der Rastnase 36.

Die Dichtungsnut 50 wird auf ihrer bezüglich der Montageachse 30 radial inneren Seite von der Umfangswand des Grundgehäuseteils 22 begrenzt. Auf der radial äußeren Seite wird die Dichtungsnut 50 von der Umfangswand 28 des Radoms 24 begrenzt. Die Umfangswand 28 überlappt den Vorsprung 52. Die Umfangswand 28 liegt mit ihrer bezüglich der Montageachse 30 radial inneren Umfangsseite an der radial äußeren Umfangsseite des Vorsprungs 52 an.

In der Dichtungsnut 50 ist eine bezüglich der Montageachse 30 umfangsmäßige zusammenhängende Dichtung 54 in radialer Richtung dichtend angeordnet.

Das Radom 24 weist ferner insgesamt vier gehäuseseitige Klemmelemente 56 einer Klemmeinrichtung 58 zum festklemmen des Keramiksubstrats 90 mit der Radarantenne 14 auf. Die gehäuseseitigen Klemmelemente 56 sind in der Figur 2, in der das Radom 24 der besseren Übersichtlichkeit wegen transparent dargestellt ist, und der Figur 3 gezeigt. Die gehäuseseitigen Klemmelemente 56 sind an der dem Grundgehäuseteil 22 zugewandten inneren Deckenseite des Radoms 24 angeordnet. Bei den gehäuseseitigen Klemmelementen 56 handelt es sich jeweils um etwa quaderförmige Podeste, welche sich in Richtung der Montageachse 30 betrachtet von der Deckenseite des Radoms 24 weg erstrecken. Jeweils zwei der gehäuseseitigen Klemmelemente 56 befinden sich im Bereich der gleichen Umfangsseite der Umfangswand 28, an der auch jeweilige Klammerelemente 34 angeordnet sind. Die gehäuseseitigen Klemmelemente 56 befinden sich in der Projektion betrachtet etwa zwischen den jeweiligen benachbarten Klammerelementen 34.

Der Anschlussstecker 20 führt durch eine Umfangsseite des Radarsensorgehäuses 12 zwischen den dortigen Klammerverbindungen 32 nach außen. Im Inneren des Radarsensorgehäuses 12 ist der Anschlussstecker 20 elektrisch und mechanisch mit der Leiterplatte 16 verbunden. In der üblichen räumlichen Betriebsorientierung des Radarsensors 10, welche in der Figur 2 gezeigt ist, befindet sich der Anschlussstecker 20 räumlich unten. Auf diese Weise ist er gegen das Eindringen von Feuchtigkeit und Wasser besser geschützt.

Bei der Leiterplatte 16 handelt es sich um eine sogenannte FR4-Leiterkarte. Beispielhaft ist die Leiterplatte 16 als rechteckige ebene Platte ausgestaltet. Sie ist in hier nicht weiter interessierender Weise in dem Grundgehäuse 22 so befestigt, dass sich ihre gegenüberliegenden Oberflächen jeweils senkrecht zur Montageachse 30 erstrecken. Die Bauteile 18 zur Signalverarbeitung und Spannungsversorgung sind auf der der Einbauseite 26 abgewandten Oberfläche der Leiterplatte 16 montiert und mit entsprechenden Leiterbahnen elektrisch verbunden.

Auf der der Einbauseite 26 zugewandten Oberfläche der Leiterplatte 16 sind zwei längliche Anschlussleisten 60 einer Anschlussvorrichtung 62 gemäß einem ersten Ausführungsbeispiel angeordnet. Die Anschlussvorrichtung 62 dient dem mechanischen und elektrischen Anschluss des Keramiksubstrats 90 mit der Radarantenne 14. Die Anschlussleisten 60 verlaufen, wie in der Figur 2 gezeigt, parallel zueinander und erstrecken sich jeweils zwischen denjenigen Umfangsseiten des Radarsensorgehäuses 12, an denen die jeweiligen Klammerverbindungen 32 angeordnet sind. Ein Ausschnitt der Leiterplatte 16 mit einer der der Anschlussleisten 60 ist in der Figur 3 im Schnitt gezeigt. Die Anschlussleisten 60 sind mechanisch mit der Leiterplatte 16 und elektrisch mit entsprechenden Leiterbahnen der Leiterplatte 16 verbunden.

Zwischen den beiden Anschlussleisten 60 ist ein in der Figur 3 angedeuteter Absorberelement 64 flächig an der entsprechenden Oberfläche der Leiterplatte 16 befestigt, beispielsweise aufgeklebt. Das Absorberelement 64 dient zur Dämpfung von elektromagnetischer Strahlung.

Der Aufbau der beiden Anschlussleisten 60 ist im Wesentlichen identisch. Im Folgenden wird der Aufbau anhand der Anschlussleiste 60 aus der Figur 3 näher erläutert.

Die Anschlussleiste 60 verfügt über eine elektrische Kontakteinrichtung 66 zur elektrischen Kontaktierung entsprechender elektrischer Kontaktbereiche 68 aufseiten des Keramiksubstrats 90 mit der Radarantenne 14. Ferner umfasst die Anschlussleiste 60 ein anschlussseitiges Klemmelement 70 der Klemmeinrichtung 58. Darüber hinaus weist die Anschlussleiste 60 einen länglichen Anschlussgrundkörper 72 auf, an dem das anschlussseitige Klemmelement 70 einstückig realisiert ist und in welchem eine Mehrzahl von elektrischen Kontaktelementen 74 der Kontakteinrichtung 66 gelagert sind.

Der Anschlussgrundkörper 72 ist aus elektrisch isolierendem Material. Er erstreckt sich zwischen den Umfangsseiten des Radarsensorgehäuses 12. Auf einer Längsseite, die der anderen Anschlussleiste 60 der Anschlussvorrichtung 62 zugewandt ist, befindet sich das anschlussseitige Klemmelement 70. Das anschlussseitige Klemmelement 70 erhebt sich podestartig von der Leiterplatte 16 weg und über die gesamte Länge des Anschlussgrundkörpers 72.

Auf der dem anderen Anschlusskörper 72 abgewandten Seite des anschlussseitigen Klemmelements 70 ist eine Vertiefung 76 angeordnet. Die Vertiefung 76 ist auf ihrer der Leiterplatte 16 abgewandten Seite offen. Sie erstreckt sich nahezu über die gesamte Länge des Anschlussgrundkörpers 72.

Neben der Vertiefung 76 erhebt sich ein Podest, in dem sich ein Führungsspalt 78 für die elektrischen Kontaktelemente 78 befindet. Der Führungsspalt 78 erstreckt sich einerseits nahezu über die gesamte Länge des Anschlussgrundkörpers 72. Andererseits verbindet der Führungsspalt 78 eine der anderen Anschlussleiste 60 abgewandte Rückseite des Anschlussgrundkörpers 72 mit der Vertiefung 76. Auf der Rückseite des Anschlusskörpers 72 öffnet sich der Führungsspalt 78 auf der der Leiterplatte 16 zugewandten Seite.

Im Bereich einer Öffnung des Führungsspalts 78 zur Vertiefung 76 und der Öffnung zur Rückseite ist jeweils ein Paar von Haltestäben 80 zur Positionierung und Lagerung der elektrischen Kontaktelemente 74 angeordnet. Die Haltestäbe 80 erstrecken sich parallel zueinander entlang des Anschlussgrundkörpers 72. Die Haltestäbe 80 sind aus elektrisch isolierendem Material.

Durch die der Leiterplatte 16 abgewandte Oberseite des Podestes des Anschlussgrundkörpers 62 führt eine Werkzeugaufnahme 82. Die Werkzeugaufnahme 82 führt in den Führungsspalt 78. Die Werkzeugaufnahme 82 hat die Form eines langgestreckten Spaltes, der sich in Längsrichtung des Führungsspalts 78 über diesen hinaus erstreckt. Die Werkzeugaufnahme 82 dient zur Aufnahme und Führung eines externen Werkzeugs 84 zur Betätigung der Kontaktelemente 74.

Die elektrische Kontakteinrichtung 66 verfügt über eine Vielzahl von elektrischen Kontaktelementen 74, welche nebeneinander entlang des Anschlussgrundkörpers 72 in dem Führungsspalt 78 angeordnet sind. Die elektrischen Kontaktelemente 74 sind untereinander nicht in elektrischen Kontakt. Die Kontaktelemente 74 des gezeigten Ausführungsbeispiels sind im Wesentlichen identisch aufgebaut. Jedes Kontaktelement 74 besteht aus einem länglichen elastischen elektrischen Leiter, beispielsweise eine Metallfeder.

Im Folgenden werden die Kontaktelemente 74 anhand des in Figur 3 gezeigten Kontaktelements 74 näher erläutert. Das Kontaktelement 74 erstreckt sich durch die beiden Öffnungen des Führungsspalts 78. Das Kontaktelement 74 ist zwischen den entsprechenden Haltestäben 80 der beiden Haltestab-Paare gelagert. Mit einem Ende ist das Kontaktelement 74 beispielsweise mittels einer Lötverbindung elektrisch und mechanisch mit einem entsprechenden elektrisch leitenden Bereich der Leiterplatte 16 verbunden. An dem freien Ende ist das Kontaktelement 74 außerhalb des Führungsspalts 78 mit einem Kontaktarm 86 ausgestattet. Der Kontaktarm 86 geht an seinem Ende in zwei gabelförmig angeordnete Kontaktfinger 88 über.

In einer in der Figur 3 angedeuteten Kontaktposition I des Kontaktarms 86 umgreifen die Kontaktfinger 88 einen Rand des Keramiksubstrats 90 auf in Richtung der Montageachse 30 betrachtet gegenüberliegenden Seiten.

Das Kontaktelement 74 weist ferner einen Betätigungsabschnitt 92 auf. Der Betätigungsabschnitt 92 befindet sich zwischen dem Kontaktarm 86 und dem an der Leiterplatte 16 befestigten Ende des Kontaktelements 74. Der Betätigungsabschnitt 92 ist innerhalb des Führungsspalts 78 im Bereich der Werkzeugaufnahme 82 angeordnet. An dem Betätigungsabschnitt 92 kann das Werkzeug 84 angreifen und damit den Kontaktarm 86 aus der Kontaktposition I in eine Zusammenbauposition II bewegen. Die Zusammenbauposition II des Kontaktarms 86 ist in der Figur 3 gestrichelt angedeutet. In der Zusammenbauposition II sind die Kontaktfinger 88 von der Leiterplatte 16 weg in Richtung der Einbauseite 26 gebogen. Die Gabel, welche durch die Kontaktfinger 88 gebildet ist, ist in der Zusammenbauposition II bereit zur Aufnahme des Keramiksubstrats 90.

Das Keramiksubstrat 90 hat beispielhaft die Form einer rechteckigen Platte. Das Keramiksubstrat 90 ist aus Mehrlagenkeramik, beispielsweise LTCC, gebildet. Die der Einbauseite 26 des Grundgehäuseteils 22 zugewandte Plattenfläche des Keramiksubstrats 90 bildet eine Abstrahlseite 94 des Keramiksubstrats 90 mit der Radarantenne 14. Im Bereich der Abstrahlseite 94 weist das Keramiksubstrat 90 entsprechende, in den Figuren nicht näher bezeichnete Antennenstrukturen auf. Außerdem befinden sich im Bereich der den Anschlussleisten 60 zugewandten Längsrändern an auf der Abstrahlseite 94 ein Teil der elektrischen Kontaktbereiche 68, welche den in der Figur 3 oberen Kontaktfingern 88 der jeweiligen Kontaktelementen 74 zugeordnet sind.

Auf der der Abstrahlseite 94 abgewandten Rückseite des Keramiksubstrats 90 sind im Bereich der Längsränder des Keramiksubstrats 90 weitere elektrische Kontaktbereiche 68 angeordnet, welche den in der Figur 3 unteren Kontaktfingern 88 der entsprechenden Kontaktelemente 74 zugeordnet sind. Des Weiteren ist auf der Rückseite des Keramiksubstrats 90 ein Radar-TRX-Chip 96 angeordnet und entsprechend elektrisch kontaktiert. Der Radar-TRX-Chip 96 weist einen Sender und einen Empfänger für entsprechende Radarsignale auf. Der Radar-TRX-Chip 96 ist in dem freien Bereich zwischen dem Keramiksubstrat 90 und der Leiterplatte 16 angeordnet. Der Radar-TRX-Chip 96 befindet sich zwischen den Anschlussleisten 60.

Zur Herstellung des Radarsensors 10 werden das Grundgehäuseteil 22, das Radom 24, die Leiterplatte 16 mit den Anschlussleisten 60 und dem Anschlussstecker 22 und das Keramiksubstrat 90 mit der Radarantenne 40 jeweils vormontiert.

Die Leiterplatte 16 wird mit ihrer die Bauteile 18 tragenden Seite voran in einer Montagerichtung 98, welche in der Figur 3 durch einen Pfeil angedeutet ist, parallel zur Montageachse 30 in das Grundgehäuseteil 22 eingebaut und dort fixiert.

Anschließend wird in die Werkzeugaufnahmen 82 der beiden Anschlussleisten 60 jeweils eines der Werkzeuge 84 gesteckt. Damit werden die Kontaktelemente 74 gegen ihre elastische Rückstellkraft in ihre Zusammenbauposition II bewegt.

Das Keramiksubstrat 90 mit der Radarantenne 14 wird mit seiner der Abstrahlseite 94 abgewandten Rückseite voran in Montagerichtung 98 zwischen den Anschlussleisten 60 so platziert, dass die jeweiligen Längsränder in den Gabeln der Kontaktfinger 88 der entsprechenden Kontaktelemente 74 zu liegen kommen.

Die Werkzeuge 84 werden aus den Werkzeugaufnahmen 82 entfernt, wodurch sich die Kontaktelemente 74 aufgrund ihrer elastischen Rückstellkraft in ihre jeweilige Kontaktposition I bewegen. Dabei werden zwischen den Kontaktfingern 88 und den jeweiligen Kontaktbereichen 68 des Keramiksubstrats 90 jeweilige elektrische Kontakte hergestellt. Das Keramiksubstrat 90 liegt in der korrekten Einbauposition auf den anschlussseitigen Klemmelementen 70, auf gegenüberliegenden Seiten gelagert, auf.

Danach wird das Radom 24 unter Zwischenlage der Dichtung 54 in Montagerichtung 98 auf das Grundgehäuseteil 22 gesteckt. Dabei werden die entsprechenden freien Enden der Klammerelemente 34 jeweils über die keilartigen Schrägen 38 der Rastnasen 36 geführt. Mit einem Verschlusswerkzeug 100, welches in der Figur 4 angedeutet ist, werden die Klammerelemente 34 an ihren S-förmigen Biegungen 44 zur Umfangswand des Grundgehäuseteils 22 gedrückt, wodurch die jeweiligen Rastösen 46 über die Rastnasen 36 gleiten. Nach Entfernen des Verschlusswerkzeugs 100 verrasten die Klammerelemente 34 aufgrund der elastischen Rückstellkraft der Klammerelemente 34 in den entsprechenden Rastnuten 40 der Rastnasen 36.

Durch die elastische Vorspannung der Klammerelemente 34 wird das Radom 24 in Richtung der Montageachse 30 gegen den Rand des Grundgehäuseteils 22 gedrückt. Die gehäuseseitigen Klemmelemente 56 drücken dabei gegen die Abstrahlseite 94 des Keramiksubstrats 90. Die gehäuseseitigen Klemmelemente 56 befinden sich jeweils gegenüber des entsprechenden anschlussseitigen Klemmelements 70. Mit den gehäuseseitigen Klemmelementen 56 wird eine Klemmkraft, in der Figur 3 angedeutet durch einen Pfeil 102, ausgeübt, mit der das Keramiksubstrat 90 mit der Radarantenne 14 zwischen den gehäuseseitigen Klemmelementen 56 und den jeweiligen anschlussseitigen Klemmelementen 70 eingeklemmt wird.

Zum Ausbau des Keramiksubstrats 90 mit der Radarantenne 14 werden Verrastungen der Klammerverbindung 32 mithilfe des Verschlusswerkzeugs 100 gelöst. Das Radom 24 wird entgegen der Montagerichtung 98 von dem Grundgehäuseteil 22 entfernt. Die Werkzeuge 84 werden in die jeweiligen Werkzeugaufnahmen 82 gesteckt, sodass die Kontaktelemente 74 in ihre Zusammenbauposition II bewegt werden. Das Keramiksubstrat 90 mit der Radarantenne 14 wird anschließend entgegen der Montagerichtung 98 entnommen.

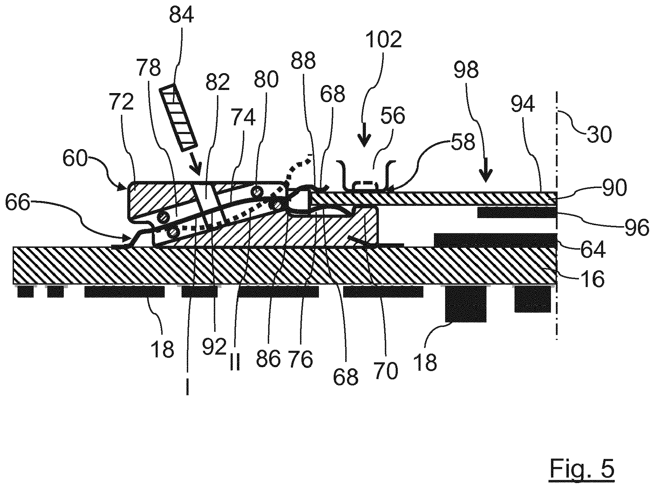

In der Figur 5 ist ein Radarsensor 10 mit einer Anschlussvorrichtung 62 gemäß einem zweiten Ausführungsbeispiel gezeigt. Diejenigen Elemente, die zu denen des ersten Ausführungsbeispiels aus den Figuren 1 bis 4 ähnlich sind, sind mit denselben Bezugszeichen versehen. Das zweite Ausführungsbeispiel unterscheidet sich von dem ersten Ausführungsbeispiel dadurch, dass beim zweiten Ausführungsbeispiel jedes Kontaktelement 74 jeweils nur einen Kontaktfinger 88 aufweist. Lediglich der in Montagerichtung 98 hintere, der Leiterplatte 16 abgewandte Kontaktfinger 88 ist aus einer Kontaktposition I in eine Zusammenposition II und umgekehrt bewegbar. Der entsprechend andere Kontaktfinger 88 ist auf der der Leiterplatte 16 zugewandten Seite fest angeordnet.

## Patentansprüche

1. Anschlussvorrichtung (62) für ein Keramiksubstrat (90) mit einer Radarantenne (14) an einer Leiterplatte (16) eines Radarsensors (10) für ein Fahrzeug, wobei das Keramiksubstrat (90) mit der Radarantenne (14) ein plattenförmiges Keramiksubstrat (90) aufweist, welches wenigstens ein elektrisches/elektronisches Funktionsbauteil (96) trägt, und wobei die Anschlussvorrichtung (62) wenigstens eine Einrichtung (58) zur Fixierung des Keramiksubstrats (90) an der Leiterplatte (16) und wenigstens eine elektrische Kontakteinrichtung (66) zur elektrischen Verbindung des wenigstens einen elektrischen/elektronischen Funktionsbauteils (96) mit der Leiterplatte (16) umfasst, **dadurch kennzeichnet, dass** die wenigstens eine elektrische Kontakteinrichtung (66) wenigstens ein wenigstens abschnittsweise elastisches elektrisches Kontaktelement (74) aufweist mit wenigstens einem Kontaktabschnitt (88) zur elektrischen Kontaktierung wenigstens eines elektrischen Kontaktbereichs (68) aufseiten des Keramiksubstrats (90) und die wenigstens eine Einrichtung zur Fixierung wenigstens ein Klemmelement (56, 70) einer Klemmeinrichtung (58) zur Fixierung des Keramiksubstrats (90) aufweist.

2. Anschlussvorrichtung nach Anspruch 1, **dadurch gekennzeichnet, dass** wenigstens ein Kontaktabschnitt (88) wenigstens eines Kontaktelements (74) zwischen einer Zusammenbauposition (II) und einer Kontaktposition (I) bewegbar ist.

3. Anschlussvorrichtung nach Anspruch 1 oder 2, **dadurch gekennzeichnet, dass** wenigstens ein Kontaktelement (74) wenigstens einen Betätigungsabschnitt (92) aufweist, mit dem das wenigstens eine Kontaktelement (74) zum Wechsel wenigstens eines Kontaktabschnitts (88) des Kontaktelements (74) aus einer Kontaktposition (I) in eine Zusammenbauposition (II) oder umgekehrt bewegt werden kann.

4. Anschlussvorrichtung nach einem der vorigen Ansprüche, **dadurch gekennzeichnet, dass** wenigstens ein Kontaktelement (74) mit wenigstens einem Kontaktabschnitt (88) an wenigstens einer Plattenfläche des Keramiksubstrats (90) elektrisch kontaktierend angreifen kann.

5. Anschlussvorrichtung nach einem der vorigen Ansprüche, **dadurch gekennzeichnet, dass** wenigstens ein Kontaktelement (74) wenigstens zwei Kontaktfinger (88) aufweist, welche auf gegenüberliegenden Plattenflächen des Keramiksubstrats (90) angreifen können und/oder zwei Kontaktelemente (74) jeweils wenigstens einen Kontaktfinger (88) aufweisen, welche auf gegenüberliegenden Plattenflächen des Keramiksubstrats (90) angreifen können.

6. Anschlussvorrichtung nach einem der vorigen Ansprüche, **dadurch gekennzeichnet, dass** wenigstens ein elektrisches Kontaktelement (74) einen Federarm aufweist, welcher an einem freien Ende wenigstens einen Kontaktfinger (88) mit wenigstens einem Kontaktabschnitt aufweist.

7. Anschlussvorrichtung nach einem der vorigen Ansprüche, **dadurch gekennzeichnet, dass** wenigstens ein Anschlussgrundkörper (72) der Anschlussvorrichtung (62) wenigstens einen Teil wenigstens eines Kontaktelements (74) und/oder wenigstens ein Klemmelement (70) der wenigstens einen Klemmeinrichtung (58) wenigstens mitbildet und/oder hält.

8. Anschlussvorrichtung nach Anspruch 7, **dadurch gekennzeichnet, dass** wenigstens ein Kontaktelement (74) in und/oder auf und/oder an wenigstens einem Anschlussgrundkörper (72) gelagert ist.

9. Anschlussvorrichtung nach einem der vorigen Ansprüche, **dadurch gekennzeichnet, dass** die Anschlussvorrichtung (62) wenigstens eine Führung (82) für wenigstens ein Werkzeug (84) zur Betätigung wenigstens eines Betätigungsabschnitts (92) wenigstens eines Kontaktelements (74) aufweist.

10. Anschlussvorrichtung nach einem der vorigen Ansprüche, **dadurch gekennzeichnet, dass** wenigstens ein Klemmelement (70) einer Zusammenbaurichtung (98) des Keramiksubstrats (90) mit der Radarantenne (14) und der Anschlussvorrichtung (62) entgegen gerichtet ist und/oder wenigstens ein Klemmelement (56) in einer Zusammenbaurichtung (98) des Keramiksubstrats (90) mit der Radarantenne (14) und der Anschlussvorrichtung (62) gerichtet ist.

11. Anschlussvorrichtung nach einem der vorigen Ansprüche, **dadurch gekennzeichnet, dass** wenigstens ein Kontaktelement (74) und/oder wenigstens ein Teil der Klemmeinrichtung (58) und/oder gegebenenfalls wenigstens ein Anschlussgrundkörper (72) an der Leiterplatte (16) angeordnet, insbesondere an dieser befestigt und mit dieser elektrisch verbunden, ist.

12. Anschlussvorrichtung nach einem der vorigen Ansprüche, **dadurch gekennzeichnet, dass** wenigstens ein Klemmelement (56) an einem Radom (24) des Radarsensors (10) realisiert ist.

13. Anschlussvorrichtung nach einem der vorigen Ansprüche, **dadurch gekennzeichnet, dass** jeweils wenigstens zwei Klemmelemente (56, 70) und/oder wenigstens zwei Kontaktelemente (74), insbesondere zwei Anschlussgrundkörper (72), gegenüberliegend angeordnet sind.

14. Radarsensor (10) für ein Fahrzeug, mit einem Radarsensorgehäuse (12), in dem wenigstens eine Leiterplatte (16) und wenigstens ein Keramiksubstrat (90) mit einer Radarantenne (14) angeordnet ist, und mit wenigstens einer Anschlussvorrichtung (62), insbesondere nach einem der vorigen Ansprüche, mit der das wenigstens Keramiksubstrat (90) mit der Radarantenne (14) an der wenigstens einen Leiterplatte (16) angeschlossen ist, wobei das wenigstens eine Keramiksubstrat (90) mit der Radarantenne (14) wenigstens ein plattenförmiges Keramiksubstrat (90) aufweist, welches wenigstens ein elektrisches/elektronisches Funktionsbauteil (96) trägt, wobei die wenigstens eine Anschlussvorrichtung (62) wenigstens eine Einrichtung (58) zur Fixierung des wenigstens einen Keramiksubstrats (90) an der wenigstens einen Leiterplatte (16) und wenigstens eine elektrische Kontakteinrichtung (66) zur elektrischen Verbindung des wenigstens einen elektrischen/elektronischen Funktionsbauteils (96) mit der wenigstens einen Leiterplatte (16) umfasst, **dadurch kennzeichnet, dass** die wenigstens eine elektrische Kontakteinrichtung (66) wenigstens ein wenigstens abschnittsweise elastisches elektrisches Kontaktelement (74) aufweist mit wenigstens einem Kontaktabschnitt (88) zur elektrischen Kontaktierung wenigstens eines elektrischen Kontaktbereichs (68) aufseiten des wenigstens einen Keramiksubstrats (90) und die wenigstens eine Einrichtung zur Fixierung wenigstens ein Klemmelement (56, 70) einer Klemmeinrichtung (58) zur Fixierung des wenigstens einen Keramiksubstrats (90) aufweist.

15. Radarsensor nach Anspruch 14, **dadurch gekennzeichnet, dass** wenigstens ein Anschluss (20) für externe Signal- und/oder Stromversorgungsleitungen aus dem Radarsensorgehäuse (12) herausführt.

16. Verfahren zum Zusammenbau eines Radarsensors (10) für ein Fahrzeug, nach Anspruch 14 oder 15, **dadurch gekennzeichnet, dass** wenigstens ein Teil (60) wenigstens einer Anschlussvorrichtung (62) für ein Keramiksubstrat (90) mit einer Radarantenne (14) an einer Leiterplatte (16) angeordnet und mit entsprechenden elektrischen Leitungen elektrisch verbunden wird, die Leiterplatte (16) in einem Grundgehäuseteil (22) eines Radarsensorgehäuses (12) des Radarsensors (10) angeordnet wird, das Keramiksubstrat (90) mit der Radarantenne (14) auf wenigstens einem Klemmelement (70) der wenigstens einen Anschlussvorrichtung (62) auf Seiten der Leiterplatte (16) positioniert wird und mit einer elektrischen Kontakteinrichtung (66) der Anschlussvorrichtung (62) elektrisch kontaktiert wird, ein Radom (24) auf das Grundgehäuseteil (22) montiert und dabei mit wenigstens einem Klemmelement (56) der wenigstens Anschlussvorrichtung (62) auf Seiten des Radoms (24) das Keramiksubstrat (90) mit der Radarantenne (14) gegenüber dem wenigstens einen Klemmelement (56, 70) der wenigstens einen Anschlussvorrichtung (62) auf Seiten der Leiterplatte (16) festgeklemmt wird und das Radom (24) an dem Grundgehäuseteil (22) fixiert wird.

17. Verfahren nach Anspruch 16, **dadurch gekennzeichnet, dass** wenigstens ein elektrisches Kontaktelement (74) der elektrischen Kontakteinrichtung (66) vor dem Positionieren des Keramiksubstrats (90) mit der Radarantenne (14) auf dem wenigstens einen Klemmelement (70) der wenigstens einen Anschlussvorrichtung (62) auf Seiten der Leiterplatte (16) in eine Zusammenbauposition (II) gebracht wird und das wenigstens eine elektrische Kontaktelement (74) nach dem Positionieren des Keramiksubstrats (90) mit der Radarantenne (14) in eine Kontaktposition (I) gebracht wird.

## Claims

1. Connection apparatus (62) for a ceramic substrate (90) comprising a radar antenna (14) on a printed circuit board (16) of a radar sensor (10) for a vehicle, wherein the ceramic substrate (90) comprising the radar antenna (14) has a plate-like ceramic substrate (90) which carries at least one electrical/electronic functional component (96), and wherein the connection apparatus (62) comprises at least one device (58) for fixing the ceramic substrate (90) to the printed circuit board (16) and at least one electrical contact device (66) for electrically connecting the at least one electrical/electronic functional component (96) to the printed circuit board (16), **characterized in that** the at least one electrical contact device (66) has at least one electrical contact element (74), which is elastic at least in sections, with at least one contact section (88) for making electrical contact with at least one electrical contact region (68) on the ceramic substrate (90), and the at least one fixing device has at least one clamping element (56, 70) of a clamping device (58) for fixing the ceramic substrate (90) .

2. Connection apparatus according to Claim 1, **characterized in that** at least one contact section (88) of at least one contact element (74) can be moved between an assembly position (II) and a contact position (I).

3. Connection apparatus according to Claim 1 or 2, **characterized in that** at least one contact element (74) has at least one operating section (92) with which the at least one contact element (74) can be moved for changing over at least one contact section (88) of the contact element (74) from a contact position (I) to an assembly position (II) or vice versa.

4. Connection apparatus according to one of the preceding claims, **characterized in that** at least one contact element (74), by way of at least one contact section (88), can act in an electrically contact-making manner on at least one plate surface of the ceramic substrate (90).

5. Connection apparatus according to one of the preceding claims, **characterized in that** at least one contact element (74) has at least two contact fingers (88) which can act on opposite plate surfaces of the ceramic substrate (90), and/or two contact elements (74) each have at least one contact finger (88), which contact fingers can act on opposite plate surfaces of the ceramic substrate (90).

6. Connection apparatus according to one of the preceding claims, **characterized in that** at least one electrical contact element (74) has a spring arm which, at a free end, has at least one contact finger (88) with at least one contact section.

7. Connection apparatus according to one of the preceding claims, **characterized in that** at least one connection main body (72) of the connection apparatus (62) jointly forms and/or holds at least a portion of at least one contact element (74) and/or at least one clamping element (70) of the at least one clamping device (58) .

8. Connection apparatus according to Claim 7, **characterized in that** at least one contact element (74) is mounted in and/or on and/or at at least one connection main body (72).

9. Connection apparatus according to one of the preceding claims, **characterized in that** the connection apparatus (62) has at least one guide (82) for at least one tool (84) for operating at least one operating section (92) of at least one contact element (74).

10. Connection apparatus according to one of the preceding claims, **characterized in that** at least one clamping element (70) is directed counter to an assembly direction (98) of the ceramic substrate (90) comprising the radar antenna (14) and the connection apparatus (62) and/or at least one clamping element (56) is directed in an assembly direction (98) of the ceramic substrate (90) comprising the radar antenna (14) and the connection apparatus (62).

11. Connection apparatus according to one of the preceding claims, **characterized in that** at least one contact element (74) and/or at least one portion of the clamping device (58) and/or possibly at least one connection main body (72) are/is arranged on the printed circuit board (16), in particular fastened to the said printed circuit board and electrically connected to the said printed circuit board.

12. Connection apparatus according to one of the preceding claims, **characterized in that** at least one clamping element (56) is realized on a radome (24) of the radar sensor (10).

13. Connection apparatus according to one of the preceding claims, **characterized in that** in each case at least two clamping elements (56, 70) and/or at least two contact elements (74), in particular two connection main bodies (72), are arranged opposite one another.

14. Radar sensor (10) for a vehicle, comprising a radar sensor housing (12) in which at least one printed circuit board (16) and at least one ceramic substrate (90) comprising a radar antenna (14) are arranged, and comprising at least one connection apparatus (62), in particular according to one of the preceding claims, by way of which the at least one ceramic substrate (90) comprising the radar antenna (14) is connected to the at least one printed circuit board (16), wherein the at least one ceramic substrate (90) comprising the radar antenna (14) has at least one plate-like ceramic substrate (90) which carries at least one electrical/electronic functional component (96), wherein the at least one connection apparatus (62) comprises at least one device (58) for fixing the at least one ceramic substrate (90) to the at least one printed circuit board (16) and at least one electrical contact device (66) for electrically connecting the at least one electrical/electronic functional component (96) to the at least one printed circuit board (16), **characterized in that** the at least one electrical contact device (66) has at least one electrical contact element (74), which is elastic at least in sections, with at least one contact section (88) for making electrical contact with at least one electrical contact region (68) on the at least one ceramic substrate (90), and the at least one fixing device has at least one clamping element (56, 70) of a clamping device (58) for fixing the at least one ceramic substrate (90).

15. Radar sensor according to Claim 14, **characterized in that** at least one connection (20) for external signal and/or power supply lines leads out of the radar sensor housing (12).

16. Method for assembling a radar sensor (10) for a vehicle according to Claim 14 or 15, **characterized in that** at least a portion (60) of at least one connection apparatus (62) for a ceramic substrate (90) comprising a radar antenna (14) is arranged on a printed circuit board (16) and is electrically connected to corresponding electrical lines, the printed circuit board (16) is arranged in a main housing part (22) of a radar sensor housing (12) of the radar sensor (10), the ceramic substrate (90) comprising the radar antenna (14) is positioned on at least one clamping element (70) of the at least one connection apparatus (62) on the printed circuit board (16) and is electrically contacted by an electrical contact device (66) of the connection apparatus (62), a radome (24) is fitted onto the main housing part (22) and in the process the ceramic substrate (90) comprising the radar antenna (14) is firmly clamped on the printed circuit board (16) opposite the at least one clamping element (56, 70) of the at least one connection apparatus (62) by way of at least one clamping element (56) of the at least one connection apparatus (62) on the radome (24), and the radome (24) is fixed to the main housing part (22).

17. Method according to Claim 16, **characterized in that** at least one electrical contact element (74) of the electrical contact device (66) is moved to an assembly position (II) before the ceramic substrate (90) comprising the radar antenna (14) is positioned on the at least one clamping element (70) of the at least one connection apparatus (62) on the printed circuit board (16), and the at least one electrical contact element (74) is moved to a contact position (I) after the ceramic substrate (90) comprising the radar antenna (14) is positioned.

## Revendications

1. Dispositif de connexion (62) destiné à un substrat en céramique (90) pourvu d'une antenne radar (14) placée sur une carte de circuit imprimé (16) d'un capteur radar (10) destiné à un véhicule, le substrat en céramique (90) pourvu de l'antenne radar (14) comprenant un substrat en céramique (90) en forme de plaque qui porte au moins un composant fonctionnel électrique/électronique (96), et le dispositif de connexion (62) comportant au moins un moyen (58) de fixation du substrat en céramique (90) à la carte de circuit imprimé (16) et au moins un moyen de contact électrique (66) destiné à connecter électriquement au moins un composant fonctionnel électrique/électronique (96) à la carte de circuit imprimé (16), **caractérisé en ce que** l'au moins un moyen de contact électrique (66) comporte au moins un élément de contact électrique (74) élastique au moins par endroits qui comporte au moins une partie de contact (88) destinée à établir un contact électrique avec au moins une région de contact électrique (68) du côté du substrat en céramique (90) et l'au moins un moyen de fixation comporte au moins un élément de serrage (56, 70) d'un moyen de serrage (58) destiné à fixer le substrat en céramique (90).

2. Dispositif de connexion selon la revendication 1, **caractérisé en ce qu'**au moins une partie de contact (88) d'au moins un élément de contact (74) est mobile entre une position d'assemblage (II) et une position de contact (I).

3. Dispositif de connexion selon la revendication 1 ou 2, **caractérisé en ce qu'**au moins un élément de contact (74) comporte au moins une partie d'actionnement (92) au moyen de la quelle l'au moins un élément de contact (74) peut être déplacé d'une position de contact (I) dans une position d'assemblage (II) ou inversement pour changer au moins une partie de contact (88) de l'élément de contact (74).

4. Dispositif de connexion selon l'une des revendications précédentes, **caractérisé en ce qu'**au moins un élément de contact (74) peut s'engager électriquement, avec au moins une partie de contact (88), au niveau d'au moins une surface de plaque du substrat en céramique (90) .

5. Dispositif de connexion selon l'une des revendications précédentes, **caractérisé en ce qu'**au moins un élément de contact (74) comporte au moins deux doigts de contact (88) qui peuvent s'engager sur des surfaces de plaque opposées du substrat en céramique (90) et/ou deux éléments de contact (74) comportent chacun au moins un doigt de contact (88) qui peut s'engager sur des surfaces de plaque opposées du substrat en céramique (90) .

6. Dispositif de connexion selon l'une des revendications précédentes, **caractérisé en ce qu'**au moins un élément de contact électrique (74) comporte un bras à ressort qui comporte, à une extrémité libre, au moins un doigt de contact (88) pourvu d'au moins une partie de contact.

7. Dispositif de connexion selon l'une des revendications précédentes, **caractérisé en ce qu'**au moins un corps de base de connexion (72) du dispositif de connexion (62) au moins forme et/ou maintient au moins une partie d'au moins un élément de contact (74) et/ou au moins un élément de serrage (70) de l'au moins un moyen de serrage (58).

8. Dispositif de connexion selon la revendication 7, **caractérisé en ce qu'**au moins un élément de contact (74) est monté dans et/ou sur au moins un corps de base de connexion (72) et/ou au niveau de celui-ci.

9. Dispositif de connexion selon l'une des revendications précédentes, **caractérisé en ce que** le dispositif de connexion (62) comporte au moins un guide (82) destiné à au moins un outil (84) destiné à actionner au moins une partie d'actionnement (92) d'au moins un élément de contact (74) .

10. Dispositif de connexion selon l'une des revendications précédentes, **caractérisé en ce qu'**au moins un élément de serrage (70) est orienté à l'opposé d'un sens d'assemblage (98) du substrat en céramique (90), pourvu de l'antenne radar (14), et du dispositif de connexion (62) et/ou au moins un élément de serrage (56) est orienté dans un sens d'assemblage (98) du substrat en céramique (90), pourvu de l'antenne radar (14), et du dispositif de connexion (62) orienté.

11. Dispositif de connexion selon l'une des revendications précédentes, **caractérisé en ce qu'**au moins un élément de contact (74) et/ou au moins une partie du moyen de serrage (58) et/ou éventuellement au moins un corps de base de connexion (72) sont disposés sur la carte de circuit imprimé (16), notamment sont fixés et reliés électriquement à celle-ci.

12. Dispositif de connexion selon l'une des revendications précédentes, **caractérisé en ce qu'**au moins un élément de serrage (56) est réalisé sur un radôme (24) du capteur radar (10).

13. Dispositif de connexion selon l'une des revendications précédentes, **caractérisé en ce qu'**au moins deux éléments de serrage (56, 70) et/ou au moins deux éléments de contact (74), en particulier deux corps de base de connexion (72), sont disposés à l'opposé l'un de l'autre.

14. Capteur radar (10) destiné à véhicule et comprenant un boîtier de capteur radar (12), dans lequel sont disposés au moins une carte de circuit imprimé (16) et au moins un substrat en céramique (90) pourvu d'une antenne radar (14), et au moins un dispositif de connexion (62), en particulier selon l'une des revendications précédentes, auquel l'au moins un substrat en céramique (90) pourvu de l'antenne radar (14) est connecté à l'au moins une carte de circuit imprimé (16), l'au moins un substrat en céramique (90) pourvu de l'antenne radar (14) comprenant au moins un substrat en céramique (90) en forme de plaque qui porte au moins un composant fonctionnel électrique/électronique (96), l'au moins un dispositif de connexion (62) comprenant au moins un moyen (58) de fixation de l'au moins un substrat en céramique (90) à l'au moins une carte de circuit imprimé (16) et au moins un moyen de contact électrique (66) destiné à relier électriquement l'au moins un composant fonctionnel électrique/électronique (96)à l'au moins une carte de circuit imprimé (16), **caractérisé en ce que** l'au moins un moyen de contact électrique (66) comporte au moins un élément de contact électrique (74) élastique au moins par endroits qui comporte au moins une partie de contact (88) destinée à établir un contact électrique avec au moins une région de contact électrique (68) du côté du substrat en céramique (90) et l'au moins un moyen de fixation comporte au moins un élément de serrage (56, 70) d'un moyen de serrage (58) destiné à fixer le substrat en céramique (90).

15. Capteur radar selon la revendication 14, **caractérisé en ce qu'**au moins une connexion (20) destinée à des lignes de signal et/ou d'alimentation externes sort du boîtier de capteur radar (12).

16. Procédé d'assemblage d'un capteur radar (10), destiné à un véhicule, selon la revendication 14 ou 15, **caractérisé en ce qu'**au moins une partie (60) d'au moins un dispositif de connexion (62) destiné à un substrat en céramique (90) pourvu d'une antenne radar (14) est disposé sur une carte de circuit imprimé (16) et est relié électriquement à des lignes électriques correspondantes, la carte de circuit imprimé (16) est disposée dans une partie de boîtier de base (22) d'un boîtier de capteur radar (12) du capteur radar (10), le substrat en céramique (90) pourvu de l'antenne radar (14) est positionné sur au moins un élément de serrage (70) de l'au moins un dispositif de connexion (62) du côté de la carte de circuit imprimé (16) et est mis en contact électrique avec un moyen de contact électrique (66) du dispositif de connexion (62), un radôme (24) est monté sur la partie de boîtier de base (22) et le substrat en céramique (90) pourvu de l'antenne radar (14) est fixé par serrage, au moyen d'au moins un élément de serrage (56) de l'au moins un dispositif de connexion (62) du côté du radôme (24), en face de l'au moins un élément de serrage (56, 70) de l'au moins un dispositif de connexion (62) du côté de la carte de circuit imprimé (16) et le radôme (24) est fixé à la partie de boîtier de base (22).

17. Procédé selon la revendication 16, **caractérisé en ce qu'**au moins un élément de contact électrique (74) du moyen de contact électrique (66) est amené dans une position d'assemblage (II) avant de positionner le substrat en céramique (90) pourvu de l'antenne radar (14) sur l'au moins un élément de serrage (70) de l'au moins un dispositif de connexion (62) du côté de la carte de circuit imprimé (16) et l'au moins un élément de contact électrique (74) est amené dans une position de contact (I) après le positionnement du substrat en céramique (90) pourvu de l'antenne radar (14).
